# EUROPÄISCHE PATENTSCHRIFT

(11) **EP 2 991 452 B1**
(45) Veröffentlichungstag und Bekanntmachung des Hinweises auf die Patenterteilung: **29.04.2020**
(21) Anmeldenummer: 15179303.1
(22) Anmeldetag: 31.07.2015
(51) Int. Cl.: H05B 33/08, H05B 37/02

(54) **SYSTEM ZUR ORTSAUFGELÖSTEN BELEUCHTUNGSSTEUERUNG**
SYSTEM FOR SPATIALLY RESOLVED LIGHTING CONTROL
SYSTÈME DE COMMANDE D'ÉCLAIRAGE À RÉSOLUTION SPATIALE

(30) Priorität: 26.08.2014 DE 102014216891
(43) Veröffentlichungstag der Anmeldung: 02.03.2016
(73) Patentinhaber: Tridonic GmbH & Co KG, 6851 Dornbirn (AT)
(72) Erfinder: Lochmann, Frank, 88147 Esseratsweiler (DE); Moosmann, Florian, 6850 Dornbirn (AT); Bachmann, Johannes, 6840 Götzis (AT); Troppacher, Rainer, 6850 Dornbirn (AT)
(74) Vertreter: Rupp, Christian

(56) Entgegenhaltungen:
- WO-A1-2010/071913
- WO-A1-2013/084158
- DE-C1- 4 137 560
- DE-U1-202012 101 683
- US-A- 5 455 487
- US-A1- 2009 310 348
- US-A1- 2012 038 281
- US-A1- 2012 086 360

## Beschreibung

Die Erfindung bezieht sich auf ein System zur ortsaufgelösten Beleuchtungssteuerung. Insbesondere bezieht sich die Erfindung auf ein System, in dem ein oder mehrere Bewegungssensoren Bewegungen in einem Bereich erfassen und abhängig davon wenigstens eine Lichtquelle ansteuern. Die angesteuerte Lichtquelle ist insbesondere so ausgestaltet, dass abhängig von der Ansteuerung eine Beleuchtung für den Bereich, in dem die Bewegung erfasst wurde, und/oder einem bestimmten anderen Bereich, aktiviert bzw. deaktiviert wird. Der Bewegungsmelder überwacht also eine räumliche Lage und detektiert eine Lageänderung. Bei dem wenigstens einen Bewegungsmelder kann es sich auch um einen Präsenzmelder handeln. Im Folgenden wird synonym der Begriff Bewegungsmelder verwendet. Im einfachsten Fall können wenigstens zwei Bereiche durch einen Bewegungsmelder unterschieden werden, also ob eine Bewegung in einem von zwei Bereichen auftritt und in welchem der Bereiche sie auftritt.

Ein Bewegungsmelder weist im Allgemeinen einen Sensor auf, der Bewegungen in seiner Umgebung erfasst bzw. erkennt und daraufhin ein elektrisches Signal ausgibt. Insbesondere kann ein Bewegungsmelder als Schalter eingesetzt werden, der bei Erfassung einer Bewegung beispielsweise eine Lichtquelle aktiviert. Dies kann durch ein durch das elektrische Signal gesteuertes Relais erfolgen. Solche Anordnungen sind seit langem bekannt. Auch zur Aktivierung eines Alarmsignals kann ein Bewegungsmelder eingesetzt werden.

Dabei sind Bewegungsmelder bekannt, die entweder aktiv, z.B. mit elektromagnetischen Wellen (bspw. in Form eines Dopplerradars) oder mit Ultraschall arbeiten. Andererseits sind passive Bewegungsmelder bekannt, die z.B. eine Infrarotstrahlung bzw. eine Infrarotstrahlungsänderung erfassen. Eine Kombination dieser Techniken ist ebenfalls bekannt.

Am weitesten verbreitet sind hierbei passive Bewegungsmelder und insbesondere so genannte PIR-Bewegungsmelder (PIR = Passive Infra Red) die auf Änderungen einer abgegebenen Infrarotstrahlung im überwachten Bereich reagieren (bspw. der Wärmestrahlung im mittleren Infrarotbereich bei einer Wellenlänger von circa 10µm).

Bewegungsmelder erfassen also ein durch eine Bewegung ausgelöstes Signal passiv oder aktiv. Dabei kann vor dem Sensor des Bewegungsmelders, insbesondere im Brennweitenabstand des verwendeten Sensors, eine im Wesentlichen kugelförmige oder zylindrische Abdeckung mit Sammellinsen vorgesehen sein, die bei PIR-Bewegungsmeldern im Infrarotbereich transparent ist. Die Mehrfachlinse sammelt infrarotes Licht aus diskreten Richtungssektoren und bündelt diese auf die Sensorfläche. Bewegt sich nun ein Gegenstand oder ein Lebewesen, im Folgenden allgemein als Objekt bezeichnet, mit einer Oberflächentemperatur an dem Sensor bzw. Bewegungsmelder vorbei, die sich genügend von der Hintergrundwärmestrahlung/-infrarotstrahlung unterscheidet, so kann der Sensor eine zeitliche Abfolge von Temperaturänderungen erfassen und entsprechend ein elektrisches Signal erzeugen das gegebenenfalls verstärkt und ausgegeben wird.

Abhängig von der konkreten Ausgestaltung des Bewegungsmelders können Quer- oder Längsbewegungen detektiert werden bzw. auch eine Annäherung wenn sich das zu erkennende Objekt aus Sicht des Sensors z.B. als eine größer werdende Fläche beim Näherkommen darstellt. Um eine Abstandsänderung wahrzunehmen, eignen sich auch Ultraschall bzw. Dopplerradarsensoren besonders gut.

Als Präsenzmelder werden im Allgemeinen Bewegungsmelder bezeichnet, die höherwertig sind und ein besseres Auflösungsverhalten besitzen. So reagieren die Präsenzmelder empfindlicher auf Änderungen in ihrer Umgebung (d.h. beispielsweise Helligkeitsveränderungen im Infrarotbereich) und nehmen gegebenenfalls auch weitere Parameter wie beispielsweise die Umgebungshelligkeit auf, um bei Erreichen bestimmter Schwellenwerte beispielsweise eine Beleuchtung einzuschalten.

Aus der DE 10 2005 060 875 A1 ist ein Verfahren eine Vorrichtung zur Signalverarbeitung bei einer Winkelbestimmung mittels Mikrowellen- Bewegungssensoren bekannt.

Aus der US 5 455 487 ist ein Steuergerät für eine bewegliche Desktop- Beleuchtung bekannt.

Ziel der Erfindung ist es nun, die Möglichkeit bereitzustellen, eine ortsaufgelöste Bewegungsinformation zu erfassen und/oder abhängig von einer ortsaufgelösten Bewegungsinformation eine Lichtquelle anzusteuern. Die Lichtquelle wird dann insbesondere so angesteuert, dass eine Beleuchtung für einen bestimmten Bereich, beispielsweise in einem Raum oder in einem Flur, verändert wird. Insbesondere wird die Beleuchtung für den Bereich aktiviert/deaktiviert, in dem die Bewegung erfasst wurde bzw. der von der vom Bewegungsmelder ausgegebenen Bewegungsinformation indiziert wird.

Zur Lösung dieser Aufgabe stellt die Erfindung ein Beleuchtungssystem gemäß dem Anspruch 1 bereit. Weiterbildungen der Erfindung sind Gegenstand der abhängigen Ansprüche.

In einem ersten Aspekt wird ein Beleuchtungssystem mit wenigstens einem Bewegungsmelder und wenigstens einer Lichtquelle bereitgestellt, wobei der Bewegungsmelder wenigstens einen Sensor aufweist, der dazu eingerichtet ist, elektromagnetische Wellen und/oder Schallwellen zu empfangen und hinsichtlich eines eine räumliche Lage bzw. Lageveränderung wiedergebenden Parameters auszuwerten und die wenigstens eine Lichtquelle abhängig von dem Parameter zu steuern. Der wenigstens eine Bewegungsmelder steuert gemäss der Erfindung die wenigstens eine Lichtquelle so an, dass Leuchtmittel der Lichtquelle aktiviert/deaktiviert werden, deren Abstrahlrichtung mit der Richtung und/oder einen dem räumlichen Bereich korrelieren, in dem die Lageänderung erfolgt ist.

Die elektromagnetischen Wellen können Funkwellen, Wärmestrahlung, insbesondere Infrarotstrahlung, sein. Die Schallwellen können insbesondere Ultraschallwellen sein.

Der Bewegungsmelder kann einen Emitter für elektromagnetische Wellen und/oder Schallwellen aufweisen. Der Sensor kann dazu eingerichtet sein, elektromagnetische Wellen und/oder Schallwellen zu detektieren.

Der Parameter kann einen Abstand bzw. eine Abstandsänderung des Bewegungsmelders zu einem Objekt wiedergeben. Der Parameter kann einen Einfallwinkel bzw. eine Einfallwinkelveränderung wiedergeben. Insbesondere kann er eine Richtung und/oder einen räumlichen Bereich definieren, in dem eine Lageänderung erfolgt ist.

Der Bewegungsmelder steuert die wenigstens eine Lichtquelle abhängig von dem Parameter so an, dass eine Beleuchtung für eine in die Zukunft extrapolierte Position des Objekts aktiviert/deaktiviert wird.

Die Lichtquelle kann wenigstens zwei, vorzugsweise mehrere, Leuchtmittel aufweisen und abhängig von dem Parameter einzelne oder eine Gruppe von Leuchtmitteln aktivieren/deaktivieren.

Die Lichtquelle kann konfiguriert sein, abhängig von dem Parameter, Licht verschiedener Intensität, Farbe, Temperatur und/oder mit anderer räumlicher Richtung zu emittieren.

Der Bewegungsmelder kann ein Präsenzmelder sein.

Das Beleuchtungssystem kann mehrere Lichtquellen aufweisen. Der wenigstens eine Bewegungsmelder kann einzelne Lichtquellen und/oder Lichtquellengruppen abhängig von dem Parameter ansteuern.

Das Beleuchtungssystem kann mehrere Bewegungsmelder aufweisen, und die Leuchtmittel der wenigstens einen Lichtquelle können von mehreren Bewegungsmeldern abhängig von dem jeweiligen Parameter angesteuert werden.

In einem weiteren Aspekt wird ein Bewegungsmelder bereitgestellt, der wenigstens einen Sensor aufweist, der dazu eingerichtet ist elektromagnetische Wellen und/oder Schallwellen zu empfangen und die empfangenen Wellen hinsichtlich ihres Einfallwinkels zu unterscheiden, wobei der Bewegungsmelder funktional mit einer Steuereinheit verbunden ist, die dazu eingerichtet ist, aus den unterschiedlichen Einfallwinkeln eine räumliche Lage und/oder eine Lageveränderung zu bestimmen, und abhängig von dem Parameter und dem erfassten Einfallswinkel ein Ausgangssignal an einer Schnittstelle des Bewegungsmelders auszugeben.

Der Bewegungsmelder kann elektromagnetische Wellen, insbesondere Funkwellen, und/oder Schallwellen, insbesondere Ultraschallwellen emittieren.

Die Schnittstelle kann eine Busschnittstelle und/oder eine Schnittstelle zum Anschluss einer Lichtquelle sein.

In noch einem weiteren Aspekt wird eine Lichtquelle mit wenigstens zwei Leuchtmitteln, insbesondere LEDs, bereitgestellt, die dazu eingerichtet ist, einzelne Leuchtmittel und/oder Gruppen von Leuchtmitteln abhängig von einem an einer Schnittstelle der Lichtquelle empfangenen Signal zu aktivieren/deaktivieren. Eine Gruppe kann insbesondere Leuchtmittel einer Art oder eines Typs zusammen fassen, beispielsweise einer Farbe, Farbtemperatur, einer Emissionsstärke, ....

Die Lichtquelle kann mehrere Leuchtmittel aufweisen. Die Leuchtmittel an der Lichtquelle können in Abstrahlgruppen gegliedert sein. Eine Abstrahlgruppe kann wenigstens eine Gruppe aktivierter/deaktivierter Leuchtmittel wenigstens zum Teil umfassen.

Die Leuchtmittel einer Abstrahlgruppe können in ihrer Anordnung an der Lichtquelle und/oder ihrer Art so ausgelegt sein, dass Licht der zugehörigen Leuchtmittel im Wesentlichen in einer Richtung, Intensität, Temperatur und/oder Farbe emittiert wird.

Die Lichtquelle kann eine Steuereinheit zur Auswertung des Signals an der Schnittstelle aufweisen. Die Schnittstelle kann eine Busschnittstelle und/oder eine Schnittstelle zum Anschluss eines Bewegungsmelders sein.

Die Erfindung wird nunmehr auch mit Blick auf die Figuren beschrieben:
- Fig. 1: veranschaulicht exemplarisch ein Beleuchtungssystem mit Bewegungsmelder und seine Funktion.
- Fig. 2: veranschaulicht exemplarisch eine Funktionsweise des Beleuchtungssystems.
- Fig. 3: veranschaulicht exemplarisch eine weitere Funktionsweise des Beleuchtungssystems.
- Fig. 4: zeigt schematisch eine Ausführungsform einer Lichtquelle.
- Fig. 5: zeigt schematisch Gruppierungen von Leuchtmitteln einer Lichtquelle.
- Fig. 6: zeigt schematisch eine weitere Ausführungsform einer Lichtquelle.
- Fig. 7: zeigt schematisch einen Überblick über das Beleuchtungssystem.

Das erfindungsgemäße System weist also insbesondere wenigstens einen Bewegungsmelder auf, der eine ortsaufgelöste Bewegungsinformation ausgibt. Diese Bewegungsinformation kann dann entweder durch eine Steuereinheit des Bewegungsmelders weiter verarbeitet werden, um ein für das System passendes Signal auszugeben. Das System wertet also wenigstens einen eine räumliche Lage bzw. eine Lageveränderung wiedergebenden Parameters aus. Dieser Parameter kann von dem Bewegungsmelder generiert oder nach Übertragung des elektrischen Signals, z.B. durch eine zentrale Steuereinheit erzeugt werden.

Selbstverständlich ist es auch möglich, dass die Bewegungsinformation des Bewegungsmelders an eine Steuereinheit des Systems oder der Lichtquelle ausgegeben wird, insbesondere eine zentrale Steuereinheit, die beispielsweise über einen Bus mit dem Bewegungsmelder verbunden sein kann (DALI, DSI, ... -Bus).

Die Steuereinheit kann drahtgebunden oder drahtlos z.B. über Funk oder Licht mit dem Bewegungsmelder verbunden sein.

Die entsprechende Bewegungsinformation bzw. der wenigstens eine Parameter wird dann also entweder von dem Bewegungsmelder selbst, jedenfalls jedoch durch die Steuereinheit verarbeitet und/oder an wenigstens eine Lichtquelle, beispielsweise einer oder mehrere Leuchten ausgegeben.

Die Steuereinheit steuert dabei die wenigstens eine Lichtquelle so an, dass ein bestimmter Bereich beleuchtet wird, bzw. die Beleuchtung in einem bestimmten Bereich aktiviert/deaktiviert bzw. verändert wird. Es kann auch vorgesehen sein, dass abhängig von der Bewegungsinformation andere Parameter der wenigstens einen Lichtquelle verändert werden, beispielsweise der Dimmgrad, also die Helligkeit des von der Lichtquelle emittierten Lichts, aber auch beispielsweise die Farbtemperatur bzw. Farbe des emittierten Lichts.

Die eine oder mehreren Lichtquellen können abhängig von dem ortsaufgelösten Bewegungssignal dahingehend angesteuert werden, dass die Beleuchtung entweder für eine aktuelle Position und/oder eine in einer in die Zukunft extrapolierten Position des die erfasste Bewegung auslösenden Objekts aktiviert/deaktiviert wird.

Beispielsweise kann die Leuchtstärke der Lichtquelle gezielt erhöht werden um einen bestimmten Bereich auf eine Bewegung hin stärker oder weniger stark auszuleuchten. Dabei kann die Leuchtstärke insbesondere dadurch verändert werden, dass selektiv unterschiedliche Lichtquellen angesteuert werden oder aber, dass verschiedene, weniger oder mehr Leuchtmittel einer Lichtquelle aktiviert werden. Insbesondere handelt es sich bei den Leuchtmitteln um LEDs. Die Lichtquelle ist dabei vorzugsweise so ausgestaltet, dass eine adaptive Helligkeitsveränderung möglich ist, die eine rein elektronische Veränderung der Abstrahlcharakteristik erlaubt, d.h. ohne mechanische Veränderung der Optik bzw. der Lichtquelle.

So kann beispielsweise mittels eines erfindungsgemäßen Bewegungsmelders und einer erfindungsgemäßen Lichtquelle bei erfassen einer Bewegung an einer Eingangstür eines Raumes gezielt eine Beleuchtung im Bereich der Tür erfolgen, bzw. verändert werden und bei erkennen einer Bewegung und insbesondere der Bewegungsrichtung gezielt der weitere Weg des bewegten Objekts beleuchtet werden, um beispielsweise einen Weg zu einem Ausgang des Raumes zu weisen. Dies erlaubt folglich eine Art Tracking (Verfolgung) des die Bewegung auslösenden Objekts.

Dabei ist zu verstehen, dass die oben bereits erwähnte Steuereinheit auch in der Lichtquelle angeordnet sein kann. Insbesondere kann die Lichtquelle Teil einer Leuchte sein, die funktional mit dem Bewegungsmelder verbunden ist. So kann der Bewegungsmelder auch in einer Leuchte angeordnet sein, die dann eine elektronisch adaptive Abstrahlcharakteristik aufweist.

Bei der Integration des Bewegungsmelders in die Leuchte erfolgt vorzugsweise ein Multiplexbetrieb dahingehend, dass die Erfassung von reflektierten, sichtbaren oder nicht sichtbaren Licht (z.B. Infrarot) vorzugsweise in PWM-Pausen des Betriebs der der Leuchte zugehörigen Leuchtmittel erfolgt.

Der Sensor des Bewegungsmelders ist dabei vorzugsweise so ausgestaltet, dass er einen Winkel einer reflektierten Strahlung (bspw. einer Infrarotstrahlung bei einem Infrarotsensor), also einen Einfallswinkel und insbesondere eine Einfallswinkeländerung, auswertet und in Abhängigkeit dieses Winkels/der Winkeländerung die Lichtquelle ansteuert. Bei der Lichtquelle kann es sich, wie bereits erwähnt um ein LED-Modul handeln. Entsprechend kann bei Verwendung eines Ultraschallbewegungsmelders der Sensor den reflektierten Schall entsprechend auswerten. Genauer gesagt wird der Winkel ausgewertet, in dem die Strahlung oder ein Schall von dem Sensor des Bewegungsmelders angenommen wird bzw. auf dem Sensor auftrifft.

Der Bewegungsmelder kann also, wie ausgeführt, in einer Leuchte angebracht bzw. in einer Leuchtenanordnung sein, und einen Winkel/eine Winkeländerung einer reflektierten Strahlung bzw. reflektierter Schallwellen auswerten und dadurch eine Bewegung eines Objekts erkennen.

Der Bewegungsmelder kann dabei über einen Bus mit den Leuchten der Leuchtenanordnung, also wenigstens einer Leuchte, verbunden sein und entsprechend Leuchtmittel der Leuchten ansteuern.

Der Bewegungsmelder kann drahtgebunden oder drahtlos z.B. über Funk oder Licht mit der Leuchte verbunden sein.

Die angesteuerten Leuchtmittel, bei denen es sich insbesondere um LED-Module handeln kann, können Gruppenweise angesteuert werden und abhängig von der Position der erfassten Bewegung aktiviert werden. So kann beispielsweise in einer im Wesentlichen linearen Anordnung von Leuchten der Bewegungsmelder ein näherkommen des Objekts aufgrund der erfassten Strahlung/Schallwellen erfassen und abhängig davon einzelne Leuchten bzw. einzelne Leuchtmittel der Leuchten ansteuern, um diese zu aktivieren/ deaktivieren, ihre Farbtemperatur und/oder ihr Farbspektrum zu ändern oder die Intensität des emittierten Lichts zu verändern (dimmen).

Weiter ist es möglich, dass der wenigstens eine Bewegungsmelder innerhalb einer Leuchte mit mehreren Lichtquellen gekoppelt ist, sodass abhängig von der Bewegung des erfassten Objekts eine Lichtquelle mit wenigstens einem Leuchtmittel aktiviert werden kann. Dabei kann die Ansteuerung entlang oder gegen eine Bewegungsrichtung des erfassten Objekts erfolgen. So kann beispielsweise je nach gemessenem Winkel des bewegten Objekts ein LED-Modul der Leuchte aktiviert oder deaktiviert werden.

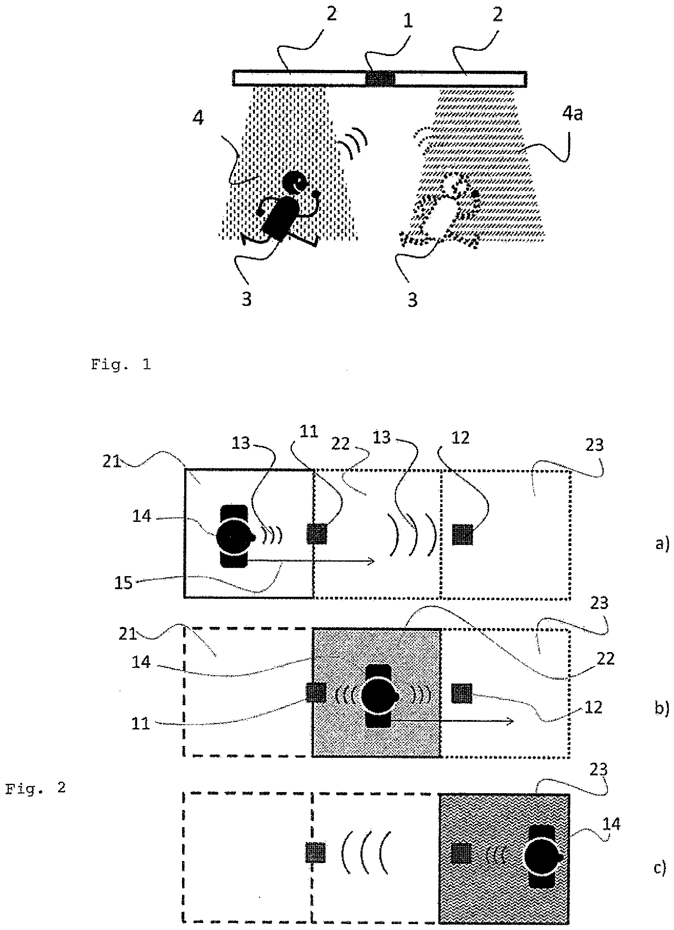

Exemplarisch ist ein solches Verhalten in Fig. 1 dargestellt. Ein Bewegungsmelder 1 ist in einer Leuchtenanordnung 2 integriert. Ein bewegtes Objekt 3 bewegt sich in den Erfassungsbereich des Bewegungsmelders 1, so dass dieser ein Signal aussendet. Von einer Steuereinheit des Systems (nicht gezeigt) wird dann eine Lichtquelle der Leuchtenanordnung 2 so angesteuert, dass eine Beleuchtung 4 der Position des Objekts 3 erfolgt. Bewegt sich das Objekt 3 weiter und erfasst der Bewegungsmelder 1 eine Bewegung in einem anderen Bereich, bzw. verändert sich der Erfassungswinkel, so kann entsprechend eine andere Ansteuerung der Lichtquelle erfolgen bzw. eine andere Lichtquelle angesteuert werden, um für das Objekt 3 an einer anderen Position eine andere oder zusätzliche Beleuchtung 4a bereitzustellen.

Außerdem ist es möglich, mehrere Bewegungsmelder anzuordnen und diese mit einer Anordnung von Lichtquellen, bspw. Leuchten funktional zu verbinden. So können beispielsweise die Bewegungsmelder in Form einer Matrix angeordnet sein (wenigstens zwei Bewegungsmelder) um eine Bewegung des Objekts im Raum zu erfassen. Abhängig von einer Auswertung der durch die wenigstens zwei Bewegungssensoren erfassten Signale (bspw. einer im Infrarotbereich erfassten Strahlungsintensität der Sensoren der Bewegungsmelder) kann dann eine Positionsbestimmung des bewegten Objekts z.B. in Form einer Triangulation erfolgen. Beispielsweise kann hier ein Sensor bereits eine Bewegung erfassen, die ein Objekt kennzeichnet, dass sich relativ nahe zu dem ersten Sensor befindet, während der zweite Bewegungsmelder bzw. der Sensor ein Signal erfasst, dass noch eine größere Entfernung zu dem Sensor bzw. dem Bewegungsmelder anzeigt. Neben einer Matrixanordnung ist zu verstehen, dass selbstverständlich auch andere Anordnungsmuster gewählt werden können, abhängig auch davon, wie genau eine Position des Objekts zu bestimmen ist.

Fig. 2 zeigt schematisch eine entsprechende Anordnung und Funktionsweise. Ein erster Bewegungsmelder 11 und ein zweiter Bewegungsmelder 12 sind so angeordnet, dass eine Auswertung der empfangenen Signale 13 eine Ortsbestimmung des Objekts 14 erlauben. Zusätzlich kann eine Bewegungsrichtung 15 des Objekts 14 bestimmt werden.

In Fig. 2a wird zunächst eine erste Position des Objekts 14 bestimmt und entsprechend eine Lichtquelle (nicht gezeigt) angesteuert. So kann die Beleuchtung in einem ersten Bereich 21 gesteuert werden. In diesem ersten Bereich 21 kann dann z.B. ein Dimmniveau des emittierten Lichts verändert werden, insbesondere kann die Lichtleistung erhöht werden durch ein Zuschalten von Leuchtmitteln. Aufgrund der Bestimmung der Bewegungsrichtung 15 kann dann auch bereits eine Beleuchtungsänderung in einem zweiten Bereich 22 und einem dritten Bereich 23 erfolgen. Der Bereich in dem die aktuelle Position bestimmt wird, ist in Fig. 2a mit einer durchgezogenen Linie angedeutet. Die Bereiche, in denen eine Beleuchtungsänderung auf Grund der ermittelten Bewegungsrichtung erfolgen kann (nicht muss) sind mit einer gepunkteten Umrandung versehen.

Bewegt sich das Objekt 14, wie in Fig. 2b gezeigt, weiter, so kann eine geänderte Position durch die Bewegungsmelder 11 und 12 erfasst werden und entsprechend eine Beleuchtungsveränderung in dem ersten bis dritten Bereich 21-23 erfolgen. So kann die Beleuchtung in dem ersten Bereich 21 beispielsweise deaktiviert werden, was durch eine gestrichelte Umrandung angedeutet ist. In dem zweiten Bereich 22, in dem das Objekt 14 momentan detektiert wird, kann dann bspw. eine Farbänderung des emittierten Lichts erfolgen (gepunktete Fläche).

Fig. 2c zeigt schließlich eine Situation, in der das Objekt 14 nochmals seine Position gewechselt hat. Die erfasste Position führt nun z.B. zu einer Veränderung der Beleuchtung in wenigstens dem dritten Bereich 23.

Die in Fig. 2 gezeigten Bereiche (erster, zweiter, und dritter Bereich 21-23), in denen die Position des Objekts 14 nicht bestimmt wird, können in ihrer Beleuchtung verändert werden. Es ist zudem zu verstehen, dass eine Beleuchtungsänderung, d.h. eine entsprechende Ansteuerung einer oder mehrerer Lichtquellen, auch gerade in wenigstens einem Bereich erfolgen kann, in denen die Position nicht erfasst wird, also z.B. in dem ersten Bereich 21 und dem dritten Bereich in Fig. 2a. Die Distanz, innerhalb der ein Bewegungsmelder eine Bewegung erfasst, liegt dabei üblicherweise im Bereich von 10 bis 20 Metern. Weiter ist zu verstehen, dass die Form und Anordnung der Bereiche 21-23 abweichen kann.

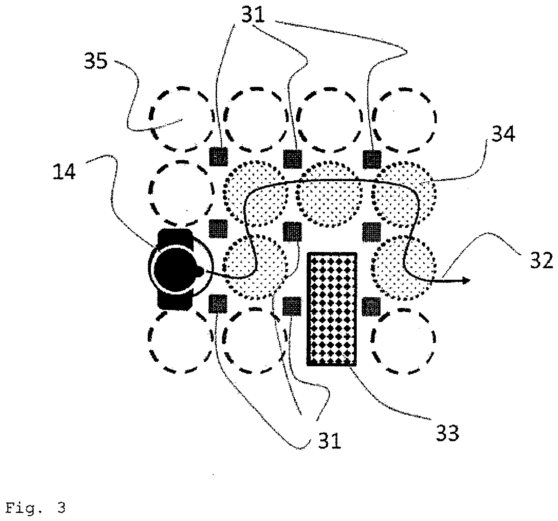

Fig. 3 zeigt eine matrixförmige Anordnung von Bewegungsmeldern 31, die gleichen oder verschiedenen Typs sein können. Die Bewegungsmelder 31 können dann eingesetzt werden, um ein Objekt 14 entlang eines Pfades 32 z.B. um ein Hindernis 33 zu leiten. So können Bereiche 34 entlang des Pfades 32 auf eine Art, z.B. mit einer Lichtfarbe (z.B. grün) beleuchtet werden, während, wenn eine Position des Objekts 14 in einem Bereich 35 außerhalb des Pfades erkannt wird, diese Bereiche anders beleuchtet werden können (z.B. rot).

Soll ein Infrarotsensor zusammen mit einem Ultraschallsensor in einem Bewegungsmelder eingesetzt werden, bzw. lediglich ein Ultraschallsensor in den Bewegungsmelder zum Einsatz kommen so ist es möglich, den Sensor an ein Ende einer Lichtquellenanordnung bzw. Leuchtenanordnung anzubringen, die im Wesentlichen linear ausgerichtet ist. Da sich Ultraschallsensoren besonders gut zur Abstandsmessung eignen, können dann abhängig von dem Abstand des bewegten Objekts zu dem Bewegungsmelder einzelne Leuchtmittel/Lichtquellen der Anordnung aktiviert/deaktiviert werden. Es ist selbstverständlich zu verstehen, dass auch gleichzeitig eine Aktivierung bzw. Deaktivierung von Leuchtmitteln erfolgen kann.

So kann beispielsweise abhängig von der Bewegung des bewegten Objekts und der vom Bewegungsmelder ausgegebene Bewegungsinformation wenigstens eine Lichtquelle oder eine Gruppe von Lichtquellen, die jeweils wenigstens ein Leuchtmittel aufweisen, aktiviert werden, während andere Lichtquellen deaktiviert oder in ihrem Verhalten durch Änderungen der Betriebsparameter entsprechend verändert werden (Farbänderung, Helligkeitsänderung, Farbtemperaturänderung, ...).

Insbesondere erlaubt es die Erfindung so eine Beleuchtung bereitzustellen bei der jeweils nur der Bereich (nicht) beleuchtet ist, indem sich das bewegte Objekt befindet. Andererseits ist es auch möglich, abhängig von einem erfassten Bewegungsvektor bestimmte Bereiche zu beleuchten. So kann die Steuereinheit beispielsweise auf Basis verschiedener Bewegungsinformationen eine Bewegungsrichtung ermitteln. In einer Ausführungsform ist es dann beispielsweise möglich Gefahrenbereiche die im Bewegungspfad des bewegten Objekts liegen durch entsprechende Beleuchtung (rote Beleuchtung) hervorzuheben und so kenntlich zu machen. Entsprechendes kann selbstverständlich durch eine Farbänderung erfolgen, die durch die entsprechende Lichtquelle bzw. Lichtquellen ausgeführt wird.

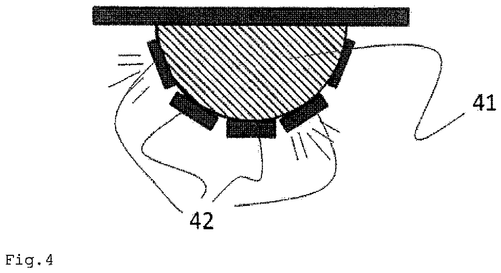

Die Lichtquelle kann, wie in Fig. 4 veranschaulicht, ein im Wesentlichen konvexes Trägerelement 41 aufweisen, auf dem wenigstens ein Leuchtmittel 42, vorzugsweise jedoch wenigstens zwei Leuchtmittel 42 angeordnet sind. Bei den Leuchtmitteln handelt es sich dabei insbesondere um LED-Module bzw. LED-Chips. Diese einzelnen Module bzw. Chips sind dann selektiv ansteuerbar, wodurch verschiedene Abstrahlcharakteristiken eingestellt werden können. Ist zum Beispiel ein LED-Modul/Chip auf dem konvexen Trägerelements angeordnet, während das andere Modul/der andere Chip gegenüberliegend auf dem Trägerelement angeordnet ist, so kann einer von drei Abstrahlmodi eingestellt werden, in dem entweder der erste Chip/das erste LED-Modul, der zweite Chip/das zweite LED-Modul, oder beide Chips/LED-Module aktiviert bzw. deaktiviert werden.

Die einzelnen Leuchtmittel bzw. LED-Chips/Module können auch in Gruppen eingeteilt werden wobei für jede Gruppe ein LED-Konverter vorgesehen sein kann. Abhängig von der Bewegungsinformation des/der Bewegungsmelder können dann Gruppen von Leuchtmitteln ein- bzw. ausgeschaltet werden und so eine entsprechende Abstrahlcharakteristik erzeugt werden.

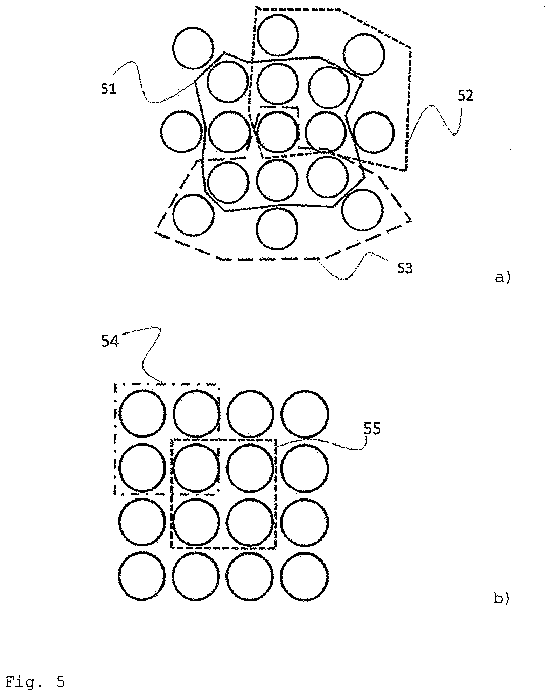

Die Figs. 5a und 5b zeigen dabei exemplarisch, wie Leuchtmittel der Lichtquelle zu Gruppen zusammengefasst werden können. Die Figur 5a zeigt dabei eine Aufsicht einer Lichtquelle mit im Wesentlichen sternförmiger Anordnung von Leuchtmitteln, von denen dann entsprechend der eingezeichneten Linien eine erste Gruppe 51, eine zweite Gruppe 52, eine dritte Gruppe 53 und eine vierte Gruppe (übrige Leuchtmittel) gebildet sind. Diese Gruppen können dann auch einzeln oder in Kombinationen betrieben werden.

Die Figur 5b zeigt ein weiteres Beispiel einer im Wesentlichen matrixförmigen Anordnung von Leuchtmitteln, die ebenfalls, wie durch die eingezeichneten Linien gekennzeichnet, zu Gruppen 54, 55 zusammengefasst sein können.

Es ist auch möglich die Gruppen zu/in Abstrahlgruppen zusammenzufassen/aufzuteilen, die dann aktiviert/deaktiviert werden.

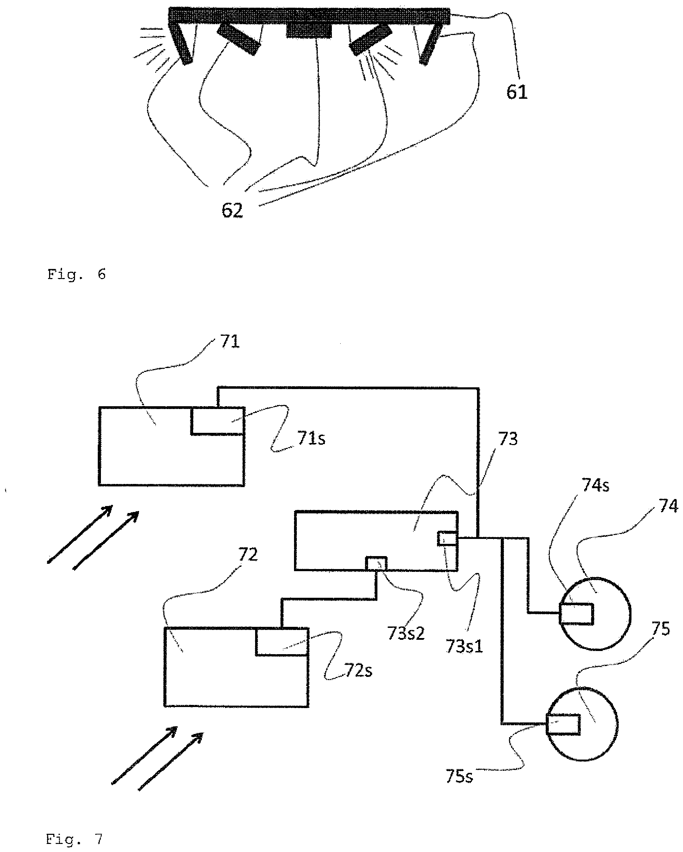

Wie in Fig. 6 gezeigt sind auch alternative Ausgestaltungen der Lichtquelle mit einem im Wesentlichen planen Träger 61 möglich. Die Leuchtmittel 62, die denen aus Fig. 4 entsprechen können, sind hier mit unterschiedlichen Neigungen auf dem Träger 61 angebracht. So können bei Aktivierung der Leuchtmittel bzw. Abstrahlgruppen von Leuchtmitteln der Lichtquelle unterschiedliche Abstrahlcharakteristiken erzeugt werden.

Alternativ können an den Leuchtmitteln im Wesentlichen Prismen- und/oder Trapezförmige Lichtlenkmittel angebracht werden. Die Leuchtmittel können dann auf den Träger angeordnet sein und die Abstrahlcharakteristik durch Lenken/Umlenken des von den Leuchtmitteln emittierten Lichts erzeugt werden. Alternativ oder zusätzlich können vor den Leuchtmitteln Linsen bzw. eine Mehrfachlinse angebracht sein, um so emittiertes Licht in gewünschte Richtungen zu lenken. Die Linse(n) kann/können mit Bezug zu dem Träger beweglich sein. So kann beispielsweise auch bei Anordnung der LED-Chips/Module auf einem im Wesentlichen planen Träger die Abstrahlcharakteristik der Lichtquelle verändert werden.

Eine entsprechende Ansteuerung kann beispielsweise mittels DALI-Befehl über einen Bus erfolgen. Wie beschrieben kann dabei ein entsprechender Befehl von einer zur Lichtquelle externen Steuereinheit empfangen werden bzw. durch eine Steuereinheit der Lichtquelle eine entsprechende Auswertung erfolgen.

Insbesondere können Bus-Befehle, die Teil einer Szenenbeleuchtungseinstellung sind, ausgewertet werden.

Eine Lichtquelle, wie sie oben beschrieben ist, kann auch Ansteuersignale mehrerer Bewegungsmelder auswerten. So kann wenigstens ein Leuchtmittel/eine Gruppe/Abstrahlgruppe von Leuchtmitteln der Lichtquelle aktiviert/deaktiviert werden, wenn ein Signal von einem Bewegungsmelder ausgegeben wurde, während ein anderes Leuchtmittel/eine andere Gruppe von Leuchtmitteln aktiviert/deaktiviert wird, wenn ein Signal von einem anderen Bewegungsmelder ausgegeben wird. Insbesondere, wenn die Lichtquelle einen entsprechenden Befehl über ihre Schnittstelle empfängt.

Fig. 7 zeigt einen schematischen Überblick über das Beleuchtungssystem gemäß der Erfindung. Darin sind exemplarisch zwei Bewegungsmelder 71, 72 gezeigt (das System weist wenigstens einen Bewegungsmelder auf), die jeweils eine Schnittstelle 71s, 72s aufweisen. Die Bewegungsmelder 71, 72 sind dazu eingerichtet, elektromagnetische Wellen und/oder Schallwellen (dargestellt durch Pfeile) zu empfangen und hinsichtlich eines eine räumliche Lage bzw. Lageveränderung wiedergebenden Parameters auszuwerten.

Diese Auswertung kann entweder in den Bewegungsmeldern 71, 72 erfolgen. Alternativ oder zusätzlich kann jedoch eine entsprechende Information über die jeweilige Schnittstelle 71s, 72s und einen Bus an eine zentrale Steuereinheit 73 übermittelt werden, die dann die Auswertung übernimmt. Die zentrale Steuereinheit 73 weist Schnittstellen 73s1 und 73s2 auf, mit denen sie entweder direkt mit einem Bewegungsmelder/einer Lichtquelle oder einem Bus verbunden werden kann. Die Bewegungsmelder können die wenigstens eine Lichtquelle 74, 75 abhängig von dem Parameter steuern. Alternativ oder zusätzlich kann die Steuerung über die zentrale Steuereinheit 73 erfolgen.

Alternativ erfolgt die Kommunikation zwischen Bewegungsmelder und Steuereinheit drahtlos z.B. über Funk oder Licht.

Zum Empfang entsprechender Ansteuerinformationen weist die wenigstens eine Lichtquelle 74, 75 eine Schnittstelle 74s, 75s auf.

Der Parameter gibt einen Abstand bzw. eine Abstandsänderung des Bewegungsmelders zu einem Objekt und/oder einen Einfallwinkel bzw. eine Einfallwinkelveränderung wieder, und definiert insbesondere eine Richtung und/oder einen räumlichen Bereich, in dem eine Lageänderung erfolgt ist.

Die Schnittstelle des jeweiligen Bewegungsmelders bzw. der jeweiligen Lichtquelle kann selbstverstänlich auch anders ausgestaltet sein, z.B. als USB, Bluetooth, Wlan, Zigbee, ... -Schnittstelle.

## Patentansprüche

1. Beleuchtungssystem mit wenigstens einem Bewegungsmelder (71), einer Steuereinheit (73) und wenigstens einer Lichtquelle (74), wobei:
- der Bewegungsmelder (71) wenigstens einen Sensor aufweist, der dazu eingerichtet ist, elektromagnetische Wellen und/oder Schallwellen zu empfangen und hinsichtlich ihrer Einfallwinkeln zu unterscheiden;
- der Bewegungsmelder (71) funktional mit der Steuereinheit (73) verbunden ist, die dazu eingerichtet ist, aus den unterschiedlichen Einfallwinkeln einen eine Lageveränderung wiedergebenden Parameter zu bestimmen; und
- der Bewegungsmelder (71) dazu eingerichtet ist, die wenigstens eine Lichtquelle (74) abhängig von dem Parameter zu steuern; **dadurch gekennzeichnet, dass**
- der Bewegungsmelder (71) die wenigstens eine Lichtquelle (74) abhängig von dem Parameter so ansteuert, dass eine Beleuchtung für eine in die Zukunft extrapolierte Position des Objekts aktiviert/deaktiviert wird.

2. Beleuchtungssystem nach Anspruch 1, wobei die elektromagnetischen Wellen Funkwellen, Wärmestrahlung, insbesondere Infrarotstrahlung, und die Schallwellen, insbesondere Ultraschallwellen sind.

3. Beleuchtungssystem nach Anspruch 1 oder 2, wobei der Bewegungsmelder (71) einen Emitter für elektromagnetische Wellen und/oder Schallwellen aufweist und der Sensor dazu eingerichtet ist, elektromagnetische Wellen und/oder Schallwellen zu detektieren.

4. Beleuchtungssystem nach einem der vorgehenden Ansprüche, wobei der Parameter einen Abstand bzw. eine Abstandsänderung des Bewegungsmelders (71) zu einem Objekt wiedergibt und insbesondere eine Richtung und/oder einen räumlichen Bereich definiert, in dem eine Lageänderung erfolgt ist.

5. Beleuchtungssystem nach einem der vorgehenden Ansprüche, wobei die Lichtquelle (74) wenigstens zwei, vorzugsweise mehrere, Leuchtmittel aufweist, und abhängig von dem Parameter einzelne oder eine Gruppe von Leuchtmitteln aktiviert/deaktiviert wird.

6. Beleuchtungssystem nach einem der vorgehenden Ansprüche, wobei die Lichtquelle (74) konfiguriert ist, abhängig von dem Parameter, Licht verschiedener Intensität, Farbe, Temperatur und/oder mit anderer räumlicher Richtung zu emittieren.

7. Beleuchtungssystem nach einem der vorgehenden Ansprüche, wobei der Bewegungsmelder ein Präsenzmelder ist.

8. Beleuchtungssystem nach einem der vorgehenden Ansprüche, wobei das Beleuchtungssystem mehrere Lichtquellen (74, 75) aufweist und der wenigstens eine Bewegungsmelder (71) einzelne Leuchtmittel (74, 75) und/oder Lichtquellengruppen abhängig von dem Parameter ansteuert.

9. Beleuchtungssystem nach einem der vorgehenden Ansprüche, wobei das Beleuchtungssystem mehrere Bewegungsmelder (71, 72) aufweist, und die Leuchtmittel der wenigstens einen Lichtquelle (74) von mehreren Bewegungsmeldern (71, 72) abhängig von dem jeweiligen Parameter angesteuert werden.

## Claims

1. A lighting system with at least one motion detector (71), a control unit (73) and at least one light source (74), wherein:
- the motion detector (71) has at least one sensor, which is configured to receive electromagnetic waves and/or sound waves and to differentiate with respect to their angles of incidence;
- the motion detector (71) is functionally connected to the control unit (73), which is configured to determine from the different angles of incidence a parameter reflecting a change in position; and
- the motion detector (71) is configured to control the at least one light source (74) depending on the parameter; **characterized in that**
- the motion detector (71) controls the at least one light source (74) depending on the parameter, so that a lighting is activated/deactivated for a position of the object extrapolated into the future.

2. The lighting system according to Claim 1, wherein the electromagnetic waves are radio waves, heat radiation, in particular, infra-red radiation, and the sound waves are, in particular, ultrasonic waves.

3. The lighting system according to Claim 1 or 2, wherein the motion detector (71) has an emitter for electromagnetic waves and/or sound waves and the sensor is configured to detect electromagnetic waves and/or sound waves.

4. The lighting system according to any one of the preceding claims, wherein the parameter reflects a distance or a change in distance of the motion detector (71) to an object and, in particular, defines a direction and/or a spatial region, in which a position change has taken place.

5. The lighting system according to any one of the preceding claims, wherein the light source (74) has at least two, preferably several, lighting means, and individual or a group of lighting means is activated/deactivated depending on the parameter.

6. The lighting system according to any one of the preceding claims, wherein the light source (74) is configured, depending on the parameter, to emit light of different intensity, colour, temperature and/or with a different spatial direction.

7. The lighting system according to any one of the preceding claims, wherein the motion detector is a presence detector.

8. The lighting system according to any one of the preceding claims, wherein the lighting system has several light sources (74, 75) and the at least one motion detector (71) controls individual lighting means (74, 75) and/or groups of light sources depending on the parameter.

9. The lighting system according to any one of the preceding claims, wherein the lighting system has several motion detectors (71, 72), and the lighting means of the at least one light source (74) are controlled by a plurality of motion detectors (71, 72) depending on the respective parameter.

## Revendications

1. Système d'éclairage avec au moins un détecteur de mouvement (71), une unité de commande (73) et au moins une source de lumière (74), dans lequel :
- le détecteur de mouvement (71) comprend au moins un capteur qui est conçu pour recevoir des ondes électromagnétiques et/ou des ondes acoustiques et les différencier en fonction de leurs angles d'incidence ;
- le détecteur de mouvement (71) est relié de manière fonctionnelle avec l'unité de commande (73) qui est conçue pour déterminer, à partir des différents angles d'incidence, un paramètre reproduisant un changement de position ; et
- le détecteur de mouvement (71) est conçu pour contrôler l'au moins une source de lumière (74) en fonction du paramètre ; **caractérisé en ce que**
- le détecteur de mouvement (71) contrôler au moins une source de lumière (74) en fonction du paramètre de façon à ce qu'un éclairage pour une position de l'objet, extrapolée dans le futur, soit activé/désactivé.

2. Système d'éclairage selon la revendication 1, dans lequel les ondes électromagnétiques sont des ondes radio, un rayonnement thermique, plus particulièrement un rayonnement infrarouge et les ondes acoustiques sont plus particulièrement des ondes ultrasonores.

3. Système d'éclairage selon la revendication 1 ou 2, dans lequel le détecteur de mouvement (71) comprend un émetteur pour des ondes électromagnétiques et/ou des ondes acoustiques et le capteur est conçu pour détecter des ondes électromagnétiques et/ou des ondes acoustiques.

4. Système d'éclairage selon l'une des revendications précédentes, dans lequel le paramètre reproduit une distance resp. une modification de distance du détecteur de mouvement (71) par rapport à un objet et plus particulièrement définit une direction et/ou une zone de l'espace dans lequel un changement de position a eu lieu.

5. Système d'éclairage selon l'une des revendications précédentes, dans lequel la source de lumière (74) comprend au moins deux, de préférence plusieurs moyens d'éclairage et, en fonction du paramètre, certains ou un groupe de moyens d'éclairage sont activés/désactivés.

6. Système d'éclairage selon l'une des revendications précédentes, dans lequel la source de lumière (74) est conçue pour émettre, en fonction du paramètre, des lumières d'intensités, de couleurs, de températures différentes et/ou avec d'autres directions dans l'espace.

7. Système d'éclairage selon l'une des revendications précédentes, dans lequel le détecteur de mouvement est un détecteur de présence.

8. Système d'éclairage selon l'une des revendications précédentes, dans lequel le système d'éclairage comprend plusieurs sources de lumière (74, 75) et l'au moins un détecteur de mouvement (71) contrôle certains moyens d'éclairage (74, 75) et/ou groupes de sources de lumière en fonction du paramètre.

9. Système d'éclairage selon l'une des revendications précédentes, dans lequel le système d'éclairage comprend plusieurs détecteurs de mouvement (71, 72) et les moyens d'éclairage de l'au moins une source de lumière (74) sont contrôlés par plusieurs détecteurs de mouvement (71, 72) en fonction du paramètre respectif.
